# EUROPEAN PATENT APPLICATION

(11) **EP 3 712 637 A1**
(43) Date of publication of application: **23.09.2020**
(21) Application number: 19164096.0
(22) Date of filing: 20.03.2019
(51) Int. Cl.: G01S 5/02

(54) **UTILIZING DUPLICATE ACCESS POINTS FOR POSITIONING**

(71) Applicant: HERE Global B.V., 5611 ZT Eindhoven (NL)
(72) Inventor: LUOMI, Marko, 33880 Lempäälä (FI); RAUHALA, Petri, 33100 Tampere (FI); WIROLA, Lauri Aarne Johannes, 33100 Tampere (FI)
(74) Representative: Cohausz & Florack

(57) **Abstract**

It is inter-alia disclosed a method comprising determining a first estimation of a position of a mobile device based on data associated with at least one access point of a first set of one or more access points, wherein the identifier of each access point of the first set of one or more access points is associated with a single location, and selecting, at least partially based on the first estimation of the position of a mobile device, data associated with at least one access point of a second set of one or more access points, wherein the identifier of each access point of the second set of access points is associated with a first location and with at least one second location, and wherein the selected data of at least one access point of the second set of one or more access points is associated with a position near to the first estimation of the position of the mobile device.

## Description

### FIELD OF THE DISCLOSURE

The invention relates to the field of non-GNSS based radio positioning and more specifically to a database for utilizing duplicate access points and/or ambiguous access points for positioning.

### BACKGROUND

Satellite signal based positioning technologies, which are mainly used outdoors, are usually not suited to deliver a satisfactory performance when used for indoor positioning, since satellite signals of global navigation satellite systems (GNSS), like the global positioning system (GPS) or the Galileo system, do not penetrate through walls and roofs strongly enough for an adequate signal reception indoors. Thus, these positioning technologies are not able to deliver a performance indoors that would enable seamless, equal and accurate navigation experience outdoors and indoors.

Therefore, several dedicated non-GNSS based radio positioning systems for indoor and outdoor positioning have been developed and commercially deployed during the past years. Examples comprise systems that are based on pseudolites, which are ground based GPS-like short-range beacons, ultrasound positioning systems, Bluetooth low energy (BLE) based positioning systems, cellular network based positioning systems and wireless local area network (WLAN) based positioning systems. WLAN based positioning systems typically use the WLAN infrastructure "as is" i.e. do not typically require installation of additional access points or reconfiguration of the existing network unless the geometry of the access points is exceptionally unfavorable for the positioning purposes.

Such a non-GNSS based radio positioning system (e.g. a self-contained positioning system) may be divided in at least three stages, an installation stage, a training stage and a positioning stage.

In the installation stage, dedicated positioning support radio devices (e.g. access points) may be installed in the environment for which a positioning system is to be provided. Alternatively or additionally, a non-GNSS based radio positioning system may make use of existing radio devices like WLAN access points or cellular network nodes as positioning support radio devices.

In the subsequent training stage, positioning data are collected. The data may be collected in the form of radio fingerprint observation reports that are based on measurements by mobile devices. A radio fingerprint observation report may indicate an observation position and radio signal parameters obtained as a result of measurements taken from the radio interface when scanning for observable radio signals at the observation position. The observation position may be for example GNSS based, sensor-based, or manually inputted. Measurements taken from the radio interface may comprise, by way of example, measured received signal strengths and identifiers of radio devices (e.g. Bluetooth beacons, WLAN access points (e.g. WLAN may correspond to Wi-Fi), base stations of a cellular network) transmitting the radio signals observable at the observation position. The training may be a continuous background process, in which mobile devices of a large number of consumers are continuously reporting collected fingerprint observation reports to a server. Consumers may consent to a participation in such a radio fingerprint observation report collection, if their device is equipped with the needed functionality. This approach is also referred to as crowd-sourcing. Since crowd-sourcing is a background process that does not directly benefit the device user, it is desirable that the crowd-sourcing process only consumes limited resources of the device.

Alternatively or additionally, mobile devices may be used for collecting radio fingerprint observation reports in a systematic manner. Collected reports may be uploaded to a database in a positioning server or in a positioning cloud, where algorithms may be run to generate radio models of positioning support devices (e.g. Bluetooth beacons, WLAN access points, base stations of a cellular network) and/or radio maps for positioning purposes.

In the positioning stage, a mobile device may estimate its current position based on own measurements taken from the radio interface and on information or a subset of information that is available from the training stage. Radio model information or radio map information that has been generated in the training stage may be provided to mobile devices by a positioning server via the Internet as assistance information for use in position estimation. Alternatively, radio model information and/or radio map information may be stored in a positioning server to which the mobile devices may connect to via the Internet for obtaining a position estimate.

A problem may occur in radio based positioning if there are several access points (e.g. Wi-Fi access point or other access points) with the same identifier, e.g. with the same BSSID (e.g. MAC address) in different location.

The reasons for this problematic case to take place may be:
Duplicate MAC addresses coming out from the manufacturing line, i.e. although the MAC address should change from one radio chip another, this does not happen, and multiple chips get the same MAC address. In positioning this shows as follows. As an example, during a crowd-sourcing phase a learning system may collect fingerprints from a Wi-Fi AP with BSSID1 in Helsinki and may collected fingerprints from another Wi-Fi AP with the same BSSID1 in Berlin (just as an example) since the MAC adress of these Wi-Fi APs in Helsinki and Berlin was duplicated when coming out from the manufacturin line. Thus, based on the learning system, the Wi-Fi AP with BSSID1 is located in Helsinki. The same BSSID1 is used by another AP in Berlin. A device will make a Wi-Fi scan near by the AP in Berlin, make a positioning request and may get positioning estimate indicating location in Helsinki.

Moving access points e.g. tethering devices (e.g. providing a hot spot at the respective location), like mobile phones that move and are configured to act as Wi-Fi access points. Such device has the same MAC address always and thus appears to the learning system as a MAC address appearing at multiple locations.

Access points that are first static then are relocated e.g. people moving from place to another. Again, in this case the same MAC address seems to be present at more than one location.

### SUMMARY OF SOME EMBODIMENTS OF THE INVENTION

It is inter-alia an object of the present invention to improve positioning if there are several access points having the same identifier and/or access points that move and/or access points that are relocated.

According to an exemplary aspect of the invention, a method is disclosed, which comprises determining a first estimation of a position of a mobile device based on data associated with at least one access point of a first set of one or more access points, wherein the identifier of each access point of the first set of one or more access points is associated with a single location, and selecting, at least partially based on the first estimation of the position of a mobile device, data associated with at least one access point of a second set of one or more access points, wherein the identifier of each access point of the second set of access points is associated with a first location and with at least one second location, and wherein the selected data of at least one access point of the second set of one or more access points is associated with a position near to the first estimation of the position of the mobile device.

The method according to the exemplary aspect of the invention may, for example, at least partially be performed by an apparatus, wherein the apparatus may be a mobile device or a component of a mobile device or a server or a cloud component, and in particular it may be the mobile device for which the first estimation of a position is determined.

According to the exemplary aspect of the invention, furthermore, an apparatus is disclosed, which comprises means for at least partially realizing the method according to the exemplary aspect of the invention. The means of the apparatus may be implemented in hardware and/or software. They may comprise for instance at least one processor for executing computer program code for realizing the required functions, at least one memory storing the program code, or both. Alternatively, they could comprise for instance circuitry that is designed to realize the required functions, for instance implemented in a chipset or a chip, like an integrated circuit. In general, the means may comprise for instance one or more processing means such as a processor and a memory. Optionally, the apparatus may comprise various other components, like a radio interface, a data interface, a user interface etc.

For example, the apparatus comprises at least one processor and at least one memory including computer program code, the at least one memory and the computer program code configured to, with the at least one processor, cause an apparatus at least to perform at least partially the method and/or the steps of the method according to the exemplary aspect of the invention.

According to the exemplary aspect of the invention, furthermore, a system is disclosed, which comprises the apparatus.

A mobile device (e.g. any mobile device) of the one or more mobile devices may be an Internet-of-Thing (IoT) device, a smart home device, a smartphone, a tablet computer, a notebook computer, a smart watch, and a smart band.

For example, the disclosed method may be part of a non-GNSS based radio positioning system as disclosed above. The mobile device may be enabled for or support such a non-GNSS based radio positioning system. This may be understood to mean that the mobile device is configured to estimate (e.g. determine) or to cause estimating (e.g. determining) its position at least partially based on radio signal parameters of one or more radio signals (e.g. one or more terrestrial radio signals) obtained at this position (e.g. obtained as a scanning result of scanning for observable radio signals at this position). Estimating (e.g. determining) of a position of the mobile device at least partially based on (a) radio signal parameter(s) may be understood to mean that the estimating is performed as a function of the radio signal parameter(s). It is however to be understood that the estimating may optionally depend on further information like a radio map. For example, such a radio map may be configured to enable mobile devices to estimate their position at least partially based on this radio map when the mobile devices are located in the area covered by the radio map. For example, the radio map is represented by radio map information which may be provided (e.g. transmitted) by a positioning server to the mobile device and/or which may be hold available by the mobile device (e.g. stored in memory means of the mobile device(s)). For example, the radio map contains or represents a respective radio model for a plurality of radio devices (e.g. access points) transmitting (e.g. broadcasting) radio signals that are observable within the area covered by the radio map. If the radio map covers a building, the radio map may contain or represent, for each floor of the building, a respective radio model for a plurality of radio devices transmitting (e.g. broadcasting) radio signals that are observable on the respective floor of the building.

A respective radio model for a respective radio device of the plurality of radio devices may be understood to represent at least the expected radio coverage of the respective radio device (e.g. on a certain floor of a building). For example, the radio model of such a radio device may describe the coverage area (e.g. on a certain floor of a building) within which radio signals transmitted or triggered to be transmitted by this radio device are expected to be observable. An example for such a radio model is a radio image representing an expected radio signal strength field of the radio signals transmitted or triggered to be transmitted by this radio device. The real radio coverage of such a radio positioning support device may however deviate from the expected radio coverage as described by such a radio model. As disclosed above, the radio map may be determined by the positioning server during the training stage of the non-GNSS based radio positioning system. Causing of estimating (e.g. determining) of a position of a mobile device at least partially based on the radio signal parameter(s) may be understood to mean that the radio signal parameter(s) are provided (e.g. transmitted) by the mobile device to the positioning server to cause the positioning server to estimate (e.g. determine) a position of the mobile device at least partially based on the radio signal parameter(s). For instance, the first set of one or more access points and the second set of one more access points may be part of the radio map, and, as an example, data associated with each access point of the first set of one or more access points (e.g. data configured (or intended) to be used for radio positioning) and data associated with each access point of the second set of one or more access points (e.g. data configured (or intended) to be used for radio positioning) may be part of the radio map.

The one or more radio signals may be terrestrial radio signals. Examples of such a terrestrial radio signal are a Bluetooth signal, a Bluetooth Low Energy (BLE) signal, a cellular network signal or a Wireless Local Area Network (WLAN) signal. The Bluetooth standards are specified by the Bluetooth Special Interest Group and are presently available under https://www.bluetooth.com/. A cellular network may for example be mobile phone network like a 2G/3G/4G/5G cellular communication network. The 2G/3G/4G/5G cellular radio communication standards are developed by the 3GPP and presently available under http://www.3gpp.org/. WLAN (e.g. considered as an embodiment of Wi-Fi) is for example specified by the standards of the IEEE 802.11 family (http://www.ieee.org/).

As an example embodiment, a second estimation of the position of the mobile device is determined at least partially based on the selected data associated with at least one access point of the second set of one or more access points.

As an example embodiment, data associated with an access points of the second set of one or more access points is determined to be associated with a location near to the first estimation of the position of the mobile device if a position associated with the data of the respective access points is within a predefined distance compared to the first estimation of the position of the mobile device.

As an example embodiment, said selecting, at least partially based on the first estimation of the position of a mobile device, data associated with at least one access point of a second set of one or more access points, comprises, for each identifier of at least one identifier of at least one identifier obtained by the mobile device, selecting data associated with the respective identifier which is associated with a position near to the first estimation of the position of the mobile device.

As an example embodiment, after determining the first estimation of the position of the mobile device, it is checked whether the first estimation of the position fulfills a quality criterion, and, if said checking yields a negative result, said selecting, at least partially based on the first estimation of the position of a mobile device, data associated with at least one access point of a second set of one or more access points is performed and, preferably, the second estimation of the position of the mobile device is determined.

As an example embodiment, said checking yields a negative result if the number of access points used for determining the first estimation of the position of the mobile device is less than a predefined number.

As an example embodiment, it is checked if an access point of the second set of one or more access points is considered to be a moving access point, and if this checking yields a positive result, this access point is removed from the second set of one or more access points.

As an example embodiment, an access point of the second set of one or more access points is considered to be a moving access point if a first set of data associated with the identifier of the respective access point is associated with a first location and a first point in time or a first time period, a second set of data associated with the identifier of the respective access point is associated with a second location and a second point in time or second time period, and a third set of data associated with the identifier of the respective access point is associated with a third location and a third point in time or a third time period, and if at least one of the following holds:
(a-i) the maximum time difference between the first point in time, the second point in time and the third point in time or between the first time period, the second time period and the third time period is below a predefined time threshold;
(a-ii) the maximum distance between the first location, the second location and the third location is below a predefined distance threshold.

As an example embodiment, an access point of the second set of one or more access points is considered not to be a moving access point if one or more of the following holds:
(i) a first set of data associated with the identifier of the respective access point is associated with a first location and a first point in time or a first time period, and a second set of data associated with the identifier of the respective access point is associated with a second location and a second point in time or second time period, and wherein the distance between the first location and the second location is larger than a predefined distance threshold and a time period between the first point in time and the second point in time or between the first time period and the second time period is smaller than a predefined time threshold;
(ii) a first set of data associated with the identifier of the respective access point is associated with a first location and a first point in time or a first time period, and a second set of data associated with the identifier of the respective access point is associated with a second location and a second point in time or second time period, the second point in time being later than the first point in time or the second time period being later than the first time period, and wherein no data associated with the identifier is associated with the first location and a point in time or time period being later than the second point in time or the second time period.

As an example embodiment, performing, if it is detected that a first set of data associated with the identifier of the respective access point is associated with a first location and a first point in time or a first time period, and a second set of data associated with the identifier of the respective access point is associated with a second location and a second point in time or second time period, the second point in time being later than the first point in time or the second time period being later than the first time period, and wherein no data associated with the identifier is associated with the first location and a point in time or time period being later than the second point in time or the second time period:
- removing the respective access point from the second set of one or more access points; and
- including the respective access point in the first set of one or more access points, and,
- in particular, removing or ignoring the first set of data associated with the identifier of the respective access point.

As an example embodiment, wherein an identifier of an access point comprises a BSSID or a MAC address (Universally Unique Identifier - UUID).

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE FIGURES

- Fig. 1: is a schematic block diagram of an example embodiment of an apparatus according to the invention;
- Fig. 2: is a flow chart illustrating an example embodiment of a method 200 according to the invention (which may represent an example operation in the apparatus of Figure 1);
- Fig. 3: is a picture of an exemplary embodiment of a system according to the invention;
- Fig. 4a: is an example embodiment of access points being associated with the same identifier;
- Fig. 4b: is an example embodiment of an access point being associated with a first location and a second location;
- Fig. 5: is a flow chart illustrating an exemplary embodiment of a method 500 according to the invention;
- Fig. 6: is a flow chart illustrating an exemplary embodiment of a method 600 according to the invention;
- Fig. 7: is a flow chart illustrating an exemplary embodiment of a method 700 according to the invention;
- Fig. 8: is a block diagram of an exemplary embodiment of a mobile device according to the invention;
- Fig. 9: is a block diagram of an exemplary embodiment of a server according to the invention; and
- Fig. 10: is a schematic illustration of examples of tangible and non-transitory storage media according to the invention.

### DETAILED DESCRIPTION OF THE FIGURES

The following description serves to deepen the understanding of the present invention and shall be understood to complement and be read together with the description of example embodiments of the invention as provided in the above SUMMARY section of this specification.

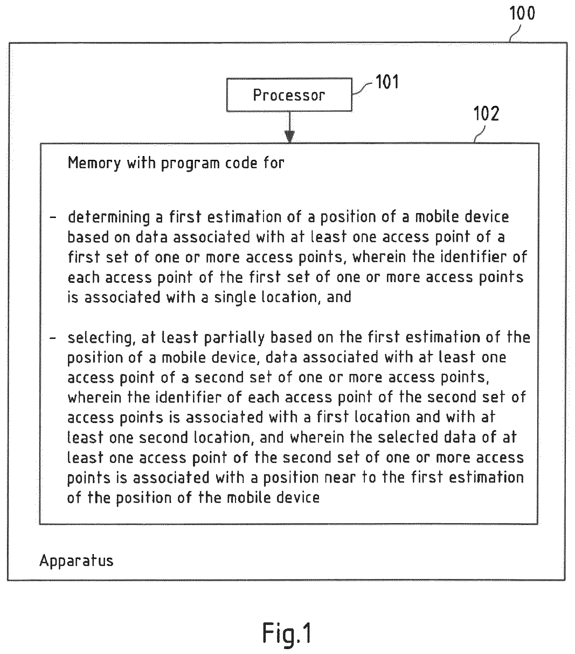

Figure 1 is a schematic block diagram of an example embodiment of an apparatus according to the invention. Apparatus 100 comprises a processor 101 and, linked to processor 101, a memory 102. Memory 102 stores computer program code for holding available data associated with at least one road segment and for providing safety data. Processor 101 is configured to execute computer program code stored in memory 102 in order to cause an apparatus to perform desired actions. Memory 102 is thus an example embodiment of a non-transitory computer readable storage medium, in which computer program code according to the invention is stored. For instance, memory 102 may store computer program code for determining a first estimation of a position of a mobile device based on data associated with at least one access point of a first set of one or more access points, wherein the identifier of each access point of the first set of one or more access points is associated with a single location, and selecting, at least partially based on the first estimation of the position of a mobile device, data associated with at least one access point of a second set of one or more access points, wherein the identifier of each access point of the second set of access points is associated with a first location and with at least one second location, and wherein the selected data of at least one access point of the second set of one or more access points is associated with a position near to the first estimation of the position of the mobile device.

Apparatus 100 could be a server or a cloud component or any other kind of mobile or stationary device. For instance, said apparatus 100 may represent a plurality of apparatus are used, wherein each apparatus may comprise a processor 101, and linked to processor 101, a memory 102, wherein memory 102 at least partially stores computer program code for maintaining a database comprising information identifying of one or more mobile devices, wherein each mobile device of the one or more mobile devices is configured to enable positioning based on radio signals and wherein said positioning enabled by the respective mobile device is considered to be at least partially unexpected. For instance, said plurality of apparatus may represent servers in a cloud interaction together in order to hold available data associated with at least one road segment and to providing safety data.

Apparatus 100 could equally be a component, like a chip, circuitry on a chip or a plug-in board, for any server, mobile or stationary device. Optionally, apparatus 100 could comprise various other components, like a data interface configured to enable an exchange of data with separate devices, a user interface like a touchscreen, a further memory, a further processor, etc.

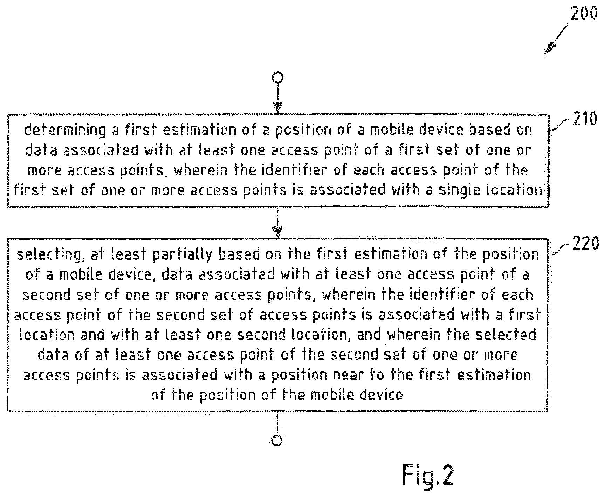

An operation of the apparatus 100 will now be described with reference to the flow chart 200 of Figure 2. The operation is an example embodiment of a method according to the invention. At least one processor 101 (may be one processor 101 or a plurality of processors 101) and the program code stored in at least one memory 102 (may be one memory 102 or a plurality of memories 102) cause at least one apparatus (may be one apparatus or a plurality of apparatuses) to perform the operation when the program code is retrieved from memory 102 and executed by processor 101. The at least one apparatus that is caused to perform the operation can be apparatus 100 or some other apparatus, for example but not necessarily a device comprising apparatus 100.

The apparatus 100 determines a first estimation of a position of a mobile device based on data associated with at least one access point of a first set of one or more access points, wherein the identifier of each access point of the first set of one or more access points is associated with a single location (action 210 of method 200).

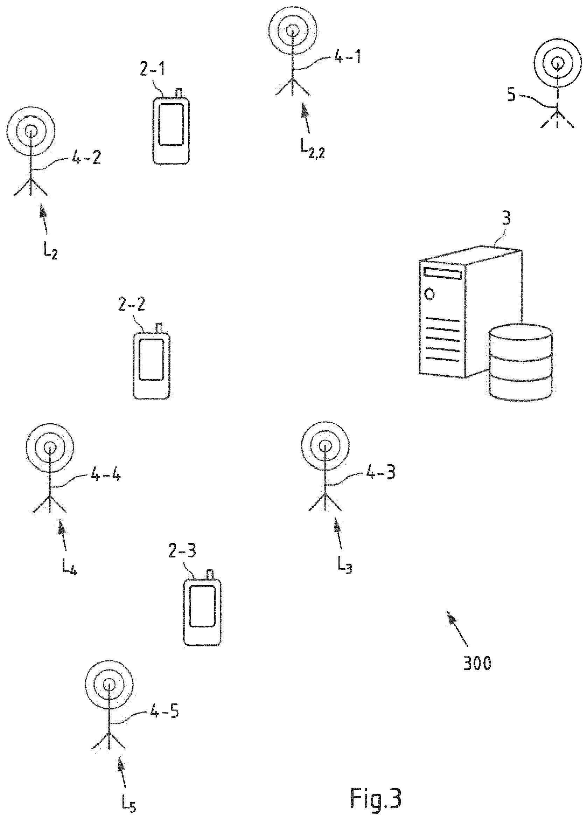

For instance, said determining a first estimation of a position of a mobile device performed in action 210 of method 200 may be performed in a non-GNSS based radio positioning system. As an example, Fig. 3 depicts a non-limiting embodiment of a non-GNSS based radio positioning system for a predetermined environment like a building or a complex of buildings (e.g. a shopping center, a parking garage, an airport, a company site, etc.).

For example, each of mobile devices 2-1 to 2-3 may be one of a smartphone, a tablet computer, a notebook computer, a smart watch and a smart band. Mobile devices 2-1 to 2-3 may be enabled for or support non-GNSS based radio positioning system 300. For instance, the mobile device of action 210 may be one of the mobile devices 2-1,2-2 or 2-3.

For instance, system 300 might comprise a server 3, which might be a positioning server 3, and a plurality of optional radio devices 4-1 to 4-5 which represent access points 4-1 to 4-5 (e.g. wireless access points 4-1 to 4-5), wherein access point 4-1 may be installed or positioned at a location L_{2,2} (e.g. access point 4-1 may represent a hotspot created by a mobile device which may have been moved from another location (e.g. a location L1 or a location L_{2,1}) to actual location L_{2,2}), access point 4-2 may be installed or positioned at a location L2, access point 4-3 may be installed or positioned at a location L3, access point 4-4 may be installed or positioned at a location L4 and access point 4-5 may be installed or positioned at a location L5. As an example, system 300 may optionally comprise a plurality of servers (e.g. forming a server cloud). Accordingly, server 3 may be part of such a plurality of servers (e.g. a server cloud) or may be represented by such a plurality of servers (e.g. a server cloud). Furthermore, it has to be understood that system 300 may not necessarily comprise a server 3 or a plurality of servers.

For exemplary purposes and without limiting the scope of the invention, it is assumed in the following that access points 4-1 to 4-5 are dedicated position support radio devices in the form of Wi-Fi/WLAN access points 4-1 to 4-5 (e.g. according to any IEEE 802.11 standard or another Wi-Fi/WLAN standard) installed or positioned in the predetermined environment of system 300. However, system 300 may comprise further access points, e.g. even at completely different locations which might even comprise different countries. In the following, it is thus referred to access points 4-1 to 4-5 without limiting the scope of the invention. As disclosed below in more detail, each of access points 4-1 to 4-5 may be configured to automatically and repeatedly transmit a respective radio signal like an Wi-Fi radio signal. The radio signals transmitted by access points 4-1 to 4-5 may contain and/or represent positioning support information which are configured to enable mobile devices 2-1 to 2-3 (or other mobile devices) to estimate their position at least partially based on these positioning support information. An example of such positioning support information is an identifier (e.g. Wi-Fi MAC address or basic service set identification (BSSID) or other universally unique identifier (UUID)) of the respective one of radio devices 4-1 to 4-5 transmitting the respective radio signal containing this positioning support information.

In the training stage of system 300, mobile devices like mobile devices 2-1 to 2-3 (and/or other mobile devices) may collect radio fingerprint observation reports indicating an observation position within the predetermined environment and the e.g. Wi-Fi MAC address or basic service set identification (BSSID) or other universally unique identifier (UUID)) contained in or represented by the radio signals transmitted by access points 4-1 to 4-5 (and/or transmitted by other access points not depicted in Fig. 3) observable at the observation position. The collected radio fingerprint observation reports may be provided (e.g. transmitted) by the mobile devices 2-1 to 2-3 to server 3 for determining a radio map.

For example, data of the radio map may be configured to enable mobile devices 2-1 to 2-3 to estimate their position at least partially based on this radio map when the mobile devices are located within the predetermined environment of system 300 (i.e. the area covered by the radio map) or even to enable server 3 (or another apparatus or server) to estimate a position of a mobile device 2-1, 2-2 or 2-3. For example, the radio map is represented by radio map information which may be provided (e.g. transmitted) by a positioning server 3 to mobile devices 2-1 to 2-3 and/or which may be hold available by mobile device 2-1 to 2-3 (e.g. stored in a memory of mobile devices 2-1 to 2-3). For example, the radio map contains or represents data associated with each access point of access points 4-1 to 4-5 (and/or, e.g. other access points not shown in Fig. 3), wherein this data may comprise a respective radio model for each of access points 4-1 to 4-5 (and/or, e.g. other access points not shown in Fig. 3) and/or fingerprints collected for each access point of access points 4-1 to 4-5 (and/or, e.g. other access points not shown in Fig. 3), wherein, for instance, a radio model of an access points may have been determined based on fingerprints collected for the respective access point. Moreover, the radio map may represent the respective installation position of each of access points 4-1 to 4-5. As disclosed above, a respective radio model for a respective access points of access points 4-1 to 4-5 may be understood to represent at least the expected radio coverage of the respective radio device. For example, the radio model of such an access points may at least describe the coverage area within which radio signals transmitted by this radio device are expected to be observable.

In the positioning stage, mobile devices 2-1 to 2-3 may use data of one or more access points of the radio map to determine their position at least partially based on radio signal parameters of observable radio signals, or, for instance, server 3 or another apparatus may use the radio map to determine a position of a mobile device 2-1, 2-2, 2-3 at least partially based on radio signals observed at the respective mobile device. For example, if mobile device 2-1 obtains radio signal parameters (e.g. UUIDs, received signal strength value/indicator, etc.) of three access points transmitted by access points 4-1, 4-2 an 4-3 when scanning for observable radio signals at its present position, it may for example determine (e.g. estimate) by use of data associated with the three access points of the radio map that its presents position is within the overlapping region of the coverage areas described by the radio models of access points 4-1, 4-2 an 4-3.

In action 210, apparatus 100 determines a first estimation of a position of a mobile device based on data associated with at least one access point of a first set of one or more access points, wherein the identifier of each access point of the first set of one or more access points is associated with a single location (action 210 of method 200). For instance, said data associated with at least one access point of a first set of one or more access points may represent the above mentioned data associated with at least one access point of a radio map (e.g. considered to be data associated with each access point of the first set of one or more access points which is used or intended to be used for positioning), wherein the data associated with the respective access point of the at least one access points of the first set of one or more access points may comprise fingerprint data collected for the respective access point and/or may comprise a radio model of the respective access point. Thus, as exemplarily explained above, based on the data associated with at least one access point of a first set of one or more access points the apparatus 100 can determine a first estimation of a position of a mobile device, wherein apparatus 100 may use radio signal parameters of observable radio signals received by mobile device (e.g. received at the position to be determined) in order to determine the first estimation of a position of the mobile device in action 210. For instance, the mobile device may be apparatus 100 or may be a mobile device being different from apparatus 100. E.g., if apparatus 100 is part of a server (e.g. server 3) then apparatus 100 may be configured to receive the radio parameters from the mobile device (e.g. via a network, e.g. a wireless network).

Furthermore, the identifier of each access point of the first set of one or more access points is associated with a single location. An access point of the first set of one or more access points is associated with a (e.g. first) location (e.g. first position) and is associated with an identifier, e.g. the above mentioned BSSID or (e.g. Wi-Fi MAC address or basic service set identification (BSSID) or other universally unique identifier (UUID)). For instance, the data associated with an access point of the first set of one or more access points associated with a single data may represent data of a radio map, e.g. fingerprints collected at or near the (first) location of the access point and/or a radio model associated with the (first) location of the access point.

Furthermore, for instance, there exists no data (e.g. data of the radio map) being associated with the same identifier (i.e. the identifier of the respective access point of the first set of one or more access points) and being associated with a second location (e.g. second position), the second location being different from the (first) location, wherein different may mean that a distance between the (first) location and the second location is higher than a predefined distance threshold, e.g. 20m, 100m, 200m, 500m, 1km, 10km, 100km, 500km or any other well distance. Furthermore, as an example, the single location which is associated with an identifier of each access points of the first set of one or more access points may represent an exact position (e.g. defined by coordinates) or an area (e.g. surrounding an exact position), wherein the size of area may not exceed a predefined range. For instance, the largest extension of the area may not exceed a predefined length, e.g. 1m, 2m, 5m, 10m, 20m, 40m, or any other well defined length. Thus, as an example, for each access point of the first set of one or more access points there exists no duplicate access point, wherein a duplicate access point represents another physical access point having the same identifier as the respective access points. And/or, as an example, for each access point of the first set of one or more access points there exists data associated with the same access points (and thus the same identifier) and a second location being different from the (first) location of the respective access points which might occur if the same access point has been moved from the second location to the (first) location or vice versa.

Thus, when determining the first estimation of a position of the mobile device based on data associated with at least one access points of a first set of one or more access points in action 210, it may be ensured that each access point of the at least one access points is only associated with a single location and that there is no ambiguity regarding the location of the access points since there is no further location (e.g. a second location) associated with the identifier of the respective access point, e.g. a further location associated with a duplicate access point (wherein the duplicate access has the same identifier as the respective access point) or e.g. other data associated with the respective access points but associated with a second location being different from the (first) location of the respective access points.

In the example system 300 access point 4-3 is positioned at location L3 and associated with an identifier 13. As a non-limiting example it may be assumed that access point 4-3 is in the first set or one or more access points, i.e., the identifier I3 is associated with a single location and the single location may be L3. Then, it may be assumed that there is not duplicate access point representing another physical access point having the same identifier I3 as access point 4-3, which for instance could occur if a first manufacturer assigns a first identifier to an access point manufacture by the first manufacturer and a second manufacturer assigns the same first identifier to another access points manufactured by the second manufacturer - and therefore there is no data associated with same identifier I3 but associated with a second location being different from the first location, wherein the second location might be the location of the duplicate access point having the same identifier 13.

And/or, as an example, it may be assumed that there is no other data associated with the access point 4-3 (and thus also associated which the identifier I3 of access points 4-3) (e.g. other data of the radio map) and a second location being different from the first location, wherein this other data may comprise fingerprints collected at or near the second location of the access point and/or a radio model associated with the second location of the access point. For instance, this could occur of access point 4-3 may have moved from a second location to the first location L3.

Then, as an example, mobile device 2-3 may receive radio signal parameters of observable radio signals from access point 4-3 including the identifier 13 of access point 4-3. Since in this example access point 4-3 is within the first set of one or more access points apparatus 100 (which might be mobile device 2-3 or another device, e.g. server 3) can determine a first estimation of a position of the mobile device 4-3 based on data associated with access point 4-3 in action 210, wherein the data associated with access point 4-3 may be part of a radio map as explained above. It has to be understood that even only data of one access point (e.g. access point 4-3) may be used in action 210 to determine the first estimation of the position of the mobile device (e.g. mobile device 2-3) even if this may results in a rough estimate of the position of the mobile device.

And/or, as an example with respect to the example system 300, access point 4-4 is positioned at location L4 and associated with an identifier 14, and as non-limiting example it may be assumed that access point 4-4 is in the first set or one or more access points, i.e., the identifier I4 is associated with a single location and the single location may be L4. Then, for instance, apparatus 100 (which might be mobile device 2-3 or another device, e.g. server 3) can determine a first estimation of a position of the mobile device 4-3 based on data associated with access point 4-3 and on data associated with access points 4-4 in action 210, wherein the data associated with access point 4-3 and the data associated with access points 4-4 may be part of a radio map as explained above. Thus, for instance, the first set of one or more access points may comprise a plurality of access points, and in action 210 the first estimation of a position of a mobile device may be determined based on at least two access points of the first set of a plurality of access points. It has to be understood that, e.g. if feasible, more than two access points may be used in action 210 to determine the first estimation of a position of the mobile device.

Thus, for instance, in action 210 apparatus 100 may use received radio signal parameters of observable radio signals received by the mobile device, and may use at least one identifier of an access points of the received radio signal parameters in order to identify the at least one access point of the first set of access points in order to determine the first estimation of a position of the mobile device. For instance, the mobile device may be apparatus 100 or may be a mobile device being different from apparatus 100. E.g., if apparatus 100 is part of a server (e.g. server 3) then apparatus 100 may be configured to receive the radio parameters from the mobile device (e.g. via a network, e.g. a wireless network).

In action 220 of method 200, apparatus 100 selects, at least partially based on the first estimation of the position of the mobile device, data associated with at least one access point of a second set of one or more access points, wherein the identifier of each access point of the second set of access points is associated with a first location and with at least one second location, and wherein the selected data of at least one access point of the second set of one or more access points is associated with a position near to the first estimation of the position of the mobile device.

For instance, an access point can only be either in the first set of one or more access points or in the second set of one or more access points, since an identifier of each access point of the second set of access points is associated with a first location and with at least one second location.

As an example, a first set of data of a first access point of the second set of one or more access points is associated with a first identifier and with a first location, e.g. since this first set of data may have been collected within this first location based on radio signals received from the first access points, wherein this first set of data may be configured (or intended) to be used for radio positioning and may be part of a radio map, and this first set of data may comprise a respective radio model for the first access point and/or fingerprints collected for the first access point, wherein, for instance, a radio model of the first access point may have been determined based on fingerprints collected for the first access point 410 at the first location or near to the first location. Furthermore, a second set of data of an access point of the second set of one or more access points is associated with the same first identifier and with a second location being different from the first location which is associated with the first set of data being associated with this first identifier. For instance, this second set of data may have been collected within the location based on radio signals received from the access point associated with the second set of data and/or may be been generated based on radio signal received from the access point within the location, wherein this second set of data may be configured (or intended) to be used for radio positioning and may be part of a radio map, and this second set of data may comprise a respective radio model for the access point (associated with the second set of data) and/or fingerprints collected for the access point (associated with the second set of data), wherein, for instance, a radio model of the access point (associated with the second set of data) may have been determined based on fingerprints collected for the access point (associated with the second set of data) at the second location or near to the second location. Furthermore, for instance, the identifier of an access point of the second set of one or more access points is associated with at least one second location, wherein each second location of the at least one second location is different from the first location associated with the identifier. In the above example, there is one second location being associated with the second set of data being associated with a second location being different from the first location, but there might be a plurality of second locations being associated with the same identifier wherein each location of the plurality of second locations may be associated with a separate set of data configured (or intended) to be used for radio positioning and which may be part of a radio map, and the respective set of data may comprise a respective radio model for a respective access point (associated with the same identifier) and/or fingerprints collected for the respective access point (associated with the same identifier), wherein, for instance, a radio model of the respective access point (associated with the same identifier) may have been determined based on fingerprints collected for the respective access point (associated with the same identifier) at the respective location or near to the respective location.

As an example, the access point (associated with the second set of data) may be the same access point as the first access point or may be a different access point compared to the first access point. In the first example case, the access point may have been moved from the first location to the second location (or vice versa), and therefore there may exist a first set of data (e.g. intended usable for radio positioning) associated with the first location and also a second set of data (e.g. intended to be usable for radio positioning) associated with the second location, and therefore the identifier of the access point is associated with both the first location and the second location.

Or, for instance, in the second example case, i.e., if the access point (associated with the second set of data) is a different access point compared to the first access point both the different access point and the first access point are associated with the same (first) identifier but represent physical separate access points which might be considered to be duplicate access points.

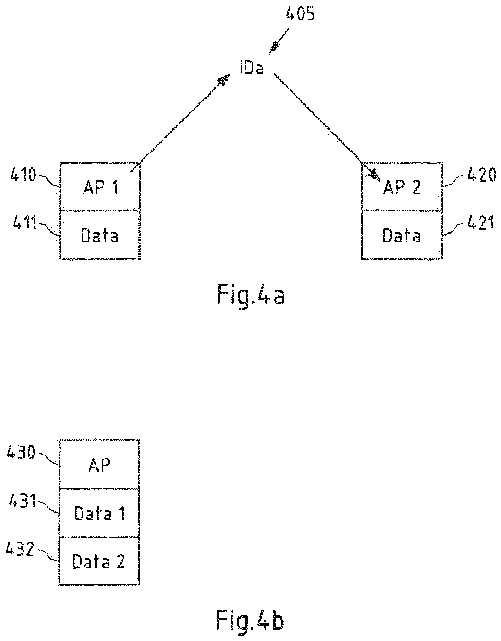

As an example of this second example case, an access point of the second set of access points may be a duplicate access point as exemplarily depicted in Fig. 4a: Access point AP1 410 may be a first access point being associated with an identifier IDa 405 and there may be a further (physically different) second access point AP2 also associated with the same identifier IDa 405. For instance, this may happen if the first access point AP1 was manufactured by a first manufacturer and a second access point AP2 was manufactured by a second manufacture and both manufacture assigned the same identifier IDa (e.g. Wi-Fi MAC address or basic service set identification (BSSID) or other universally unique identifier (UUID)) to the first access point AP1 410 and the second access points AP2. Then, later, the first access point 410 may be positioned or installed at a first location and data 411 associated with the first access point AP1 410 and the first location being usable (or intended) for radio positioning may be stored, wherein this data 410 may comprise a respective radio model for the first access point AP1 410 and/or fingerprints collected for the first access point 410, wherein, for instance, a radio model of the first access point AP1 410 may have been determined based on fingerprints collected for the first access point 410 at the first location or near to the first location. The second access point 420 may be positioned or installed at a second location being different to the first location and data 421 associated with the second access point AP2 and the second location being usable (or intended) for radio positioning may be stored, wherein this data 421 may comprise a respective radio model for the second access point AP2 420 and/or fingerprints collected for the second access point AP2 420, wherein, for instance, a radio model of the second access point AP2 420 may have been determined based on fingerprints collected for the second access point 420 at the second location or near to the second location.

Since both the first access point 410 and the second access point 420 are associated with the same identifier IDa, the data 411 associated with the first access point AP1 (which might be considered to represent a first set of data 411 associated with the first access point AP1) and associated with the first location as well as the data 421 associated with the second access point AP2 (which might be considered to represent a second set of data 421 associated with the second access point AP2) and associated with the second location are both associated with the same identifier IDa. Thus, the identifier IDa of the first access point 410 is associated with a first location, i.e., the location of the first access point AP1 410 and with a second location, i.e., the location of the second access point AP2 420 , and, the identifier IDa of the second access point 420 is associated with a first location, i.e., the location of the first access point AP1 410 and with a second location, i.e., the location of the second access point AP 420. Therefore, in this example of a duplicate access point both access points AP1 410 and AP2 420 may be considered to be part of the second set of one or more access points since both access points AP1 410 and AP2 420 are associated with the same identifier IDa, wherein the identifier IDa is associated with a first set of data 411 being associated with a first location and is associated with a second set of data 421 being associated with a second location.

As an example, the first set of data 411 may be associated with a first point in time t₁, wherein the first point in time t₁ may be a point in time of any data of the first set of data 411, e.g. a fingerprint in the first set of data 411, or may be a kind of average point in time being associated with the time when said first set of data 411 was obtained based on observations (e.g. fingerprints) from the access point. And/or, the first set of data 411 may be associated with a first time period [t_{1,start} ... t_{1,stop}], wherein t_{1,start} may represent the time of the first observation (e.g. the first fingerprint of the access point used for the first set of data 411) of the respective access point (e.g. AP1 410) and t_{1,stop} may represent the time of the last observation (e.g. the last fingerprint of the access point used for the first set of data 411) of the respective access point (e.g. AP2 410) used for creating and/or obtaining the first set of data. Similarly, for instance the second set of data 421 may be associated with a second point in time t₂, wherein the second point in time t₂ may be a point in time of any data of the second set of data 421, e.g. a fingerprint in the second set of data 421, or may be a kind of average point in time being associated with the time when said second set of data 421 was obtained based on observations (e.g. fingerprints) from the access point (e.g. AP2 420). And/or, the second set of data 421 may be associated with a second time period [t_{2,start} ... t_{2,stop}]., wherein t_{2,start} may represent the time of the first observation (e.g. the first fingerprint of the access point used for the second set of data 421) of the respective access point (e.g. AP2 420) and t_{2,stop} may represent the time of the last observation (e.g. the last fingerprint of the access point used for the second set of data 421) of the respective access point (e.g. AP2 420) used for creating and/or obtaining the second set of data 421.

An example of the above mentioned first example case, an access point AP 430 of the second set of one or more access points being associated with a first set of data being associated with a first location and being associated with at least one second set of data being associated with at least a second location, the second location being different from the first location, is depicted in Fig. 4b, i.e., the identifier of access point AP 430 is associated with a first location and second location. It has to be understood that access points AP 430 (and thus the identifier of access points AP 430 may be associated with a plurality of second locations (e.g. each being different from each other), wherein each location of the plurality of second locations is associated with a respective set of data (e.g. as explained above), but with respect to Fig. 4b the first example case will be presented with one second location and one second set of data 432 without any limitations. For instance, access point 430 may have first positioned or installed at a first position and a first set of data 431 associated with the access point AP 430 and the first location being usable (or intended) for radio positioning may be stored, wherein this first set of data 431 may comprise a respective radio model for the first access point AP1 410 and/or fingerprints collected for the first access point 410 at the first location or near to the first location, wherein, for instance, a radio model of the first access point AP1 410 may have been determined based on fingerprints collected for the first access point 410 at the first location or near to the first location. Then, the same access point 430 may have been relocated and positioned or installed at a second position and a second set of data 432 associated with the access point AP 430 and the second location being usable (or intended) for radio positioning may be stored, wherein this second set of data 432 may comprise a respective radio model for the access point AP 430 and/or fingerprints collected for the access point 430 at the second location or near to the second location, wherein, for instance, a radio model of the access point AP 430 may have been determined based on fingerprints collected for the access point 430 at the second location or near to the second location. Thus, the identifier of access point 430 of the second set of one or more access points is associated with a first location and with a second location, wherein the first location is associated with the first set of data 431 and the second location is associated with the second set of data 432.

As an example, the first set of data 431 may be associated with a first point in time t₁, wherein the first point in time t₁ may be a point in time of any data of the first set of data 431, e.g. a fingerprint in the first set of data 431, or may be a kind of average point in time being associated with the time when said first set of data 431 was obtained based on observations (e.g. fingerprints) from the access point. And/or, the first set of data 431 may be associated with a first time period [t_{1,start} ... t_{1,stop}], wherein t_{1,start} may represent the time of the first observation (e.g. the first fingerprint of the access point used for the first set of data 431) of the respective access point (e.g. AP 430) and t_{1,stop} may represent the time of the last observation (e.g. the last fingerprint of the access point used for the first set of data 431) of the respective access point (e.g. AP 430) used for creating and/or obtaining the first set of data. Similarly, for instance the second set of data 432 may be associated with a second point in time t₂, wherein the second point in time t₂ may be a point in time of any data of the second set of data 432, e.g. a fingerprint in the second set of data 432, or may be a kind of average point in time being associated with the time when said second set of data 432 was obtained based on observations (e.g. fingerprints) from the access point. And/or, the second set of data 432 may be associated with a second time period [t_{2,start} ... t_{2,stop}], wherein t_{2,start} may represent the time of the first observation (e.g. the first fingerprint of the access point used for the second set of data 432) of the respective access point (e.g. AP 430) and t_{2,stop} may represent the time of the last observation (e.g. the last fingerprint of the access point used for the second set of data 432) of the respective access point (e.g. AP 430) used for creating and/or obtaining the second set of data 432.

For instance, the second set of one or more access points may comprise exactly one access point or may comprise a plurality of access points.

As an example, at least one access point of the second set of one or more access points may be of the first example case exemplarily depicted in Fig. 4b, wherein the identifier of each access points of the at least one access point (of the first example case) of the second set of one or more access points is associated with a first location and a first set of data (e.g. the first set of data 431 depicted in Fig. 4b) and is associated with each location of at least one second location, wherein each location of the at least one second location is associated with a respective second set of data (e.g. the second set of data 432 depicted in Fig. 4b for one second location), wherein the first set of data and each of the at least one second set of data is associated with the same access point (which has been moved - e.g. AP 430 in Fig. 4b). And/or, for instance, at least one access point of the second set of one or more access points may be of the second example case exemplarily depicted in Fig. 4a, wherein the identifier of each access points of the at least one access point (of the second example case) of the second set of one or more access points is associated with a first location and a first set of data (e.g. the first set of data 421 depicted in Fig. 4a) and is associated with each location of at least one second location, wherein each location of the at least one second location is associated with a respective second set of data (e.g. the second set of data 432 depicted in Fig. 4b for one second location), and wherein the first set of data and at least one second set of data of the at least one second set of data are associated with physical different access points (e.g. AP1 410 and AP2 420 depicted in Fig. 4a).

In action 220 of method 200, apparatus 100 selects, at least partially based on the first estimation of the position of the mobile device, data associated with at least one access point of the second set of one or more access points, wherein the identifier of each access point of the second set of access points is associated with a first location and with at least one second location, and wherein the selected data of at least one access point of the second set of one or more access points is associated with a position near to the first estimation of the position of the mobile device.

The selected data associated with at least one access point of the second set of one or more access points may comprise, for each access points of the at least one access point of the second set of one or more access points, data configured (or intended) to be used for radio positioning and may be part of a radio map, and the data may comprise a respective radio model for the respective access point and/or fingerprints collected for the respective access point at a specific location, wherein, for instance, a radio model of the respective access point may have been determined based on fingerprints collected for the respective access point at the predefined location or near to the specific location, wherein the condition holds that the specific location is near to the first estimation of the position of the mobile device.

For instance, in action 220 apparatus 100 may use received radio signal parameters of observable radio signals received by the mobile device, and may use at least one identifier of at least one access point of the received radio signal parameters in order to try to identify at least one access point of the second set of one or more access points. E.g., for each identifier of the received at least one identifier it may be checked whether there is data associated with the respective identifier which is (the data) is associated with a position near to the first estimation of the position of the mobile device, and if yes, this data is selected in action 220 as data of an access point of the at least one access point of the second set of one or more access points. Then, e.g., this selected data may be used for positioning of the mobile device, e.g. in order to perform a second estimation of the position of the mobile device, as will be explained later in detail.

Thus, it may be achieved that no data of an access point of the second set of one or more access points is selected in action 220 which is associated with a different location compared to the first estimation of the position of the mobile device, which could be the case if only the received identifier is used since an identifier of an access point of the second set of one or more access points is associated with a first location and at least one second location, e.g. by means of the above explained first set of data associated with a first location (and associated with the identifier) and the at least one second set of data, wherein each set of the second set of data is associated with a different second location and is associated with the same identifier), which for example might occur for duplicate access points and/or moving/relocated access points.

As an example embodiment of action 220, data (to be selected) of an access point of the second set of one or more access points is determined to be associated with a location near to the first estimation of the position of the mobile device if a location associated with the data (to be selected) of the respective access points is within a predefined distance compared to the first estimation of the position of the mobile device. Data associated with an access point of the second set of one or more access point may associated with a specific location, e.g. the above mentioned first set of data 411 associated with an access point AP1 410 being associated with a first location (representing a specific location) or the above mentioned second set of data 421 associated with an access point AP2 being associated with a second location (representing a specific location) or the above mentioned first set of data 431 being associated with a first location (representing a specific location) or the second set of data 432 being associated with a second location (wherein both the first set of data 431 and the second set of data 432 are associated with the same access points AP 430). Then, for instance, in action 220, based on the first estimation of the position of the mobile device it may be checked whether there is data of an access point (or each access point of at least one access point) of the second set of one or more access points which is within a predefined distance compared to the first estimation of the position of the mobile device, and if yes, this data of the respective access point of the second set of one or more access points may be selected in action 220. For instance, the predefined distance may be 5m, 10m, 20m, 50m, 100m, 200m or any other well-suited value.

Furthermore, in action 220, it may be checked for at least one identifier of the above mentioned at least one identifier received by the mobile device, wherein each identifier of the at least one identifier of the received at least one identifier is associated with an access point or more access points of the second set of one or more access points, whether there is data associated with the respective identifier being associated with a location near to the first estimation of the position of the mobile device, e.g. as explained above, and if there is data associated with the respective identifier (and therefore associated with an access point of the second set of one or more access points) being associated with a location near to the first estimation of the position of the mobile device, this data may be selected in action 220.

As an non-limiting example with respect to Fig. 3, mobile device 2-3 may receive radio signal parameters of observable radio signals from access point 4-3 including the identifier I3 of access point 4-3, from access point 4-4 including the identifier I4 of access point 4-4 and from access point 4-5 including the identifier I5 of access point 4-5. It may be assumed that access point 4-5 is of the second set of one or more access points, wherein, for instance, access points 4-5 may be AP1 410 or AP2 420 depicted in Fig. 4a or AP 430 depicted in Fig. 4b. In action 220, it may be determined that received identifier I5 is associated with an access point of the second set of one or more access points, and then it may be checked whether there is data associated with respective identifier I5 being associated with a location near to the first estimation of the position of the mobile device 2-3, e.g. as explained above.

For instance, under the exemplarily assumption that access point 4-5 is access point AP1 410 of Fig. 4a and thus a duplicate access points, and thus the first location associated with the first set of data 411 of AP1 410 is the location of access points 4-5, it may be checked in action 220 whether the first set of data 411 being associated with identifier I5 is near to the first estimation of the position of the mobile device 2-3 and/or whether the second set of data 421 being associated with identifier I5 is near to the first estimation of the position of the mobile device 2-3, and then the first set of data 411 of access point AP1 410 (representing the access point 4-5 in this example) is selected since it is considered to be near to the first estimation of the position of the mobile device 2-3. For instance, it may be assumed that access point AP2 420 is positioned at a completely different second location compared to the first location of AP 410 (access point 4-5 in this example), and therefore, as an example, the second location of the second set of data 421 being associated with identifier I5 may be considered not to be within a predefined distance compared to the first estimation of the position of the mobile device 2-3 and/or the first location of the first set of data 411 being associated with identifier I5 may be considered to be within a predefined distance compared to the first estimation of the position of the mobile device 2-3 and thus the first set of data 411 being associated with identifier 15 and associated with access point 4-5 (and AP1 410 in this example) is selected in action 220.

Or, for instance, under the exemplarily assumption that access point 4-5 is access point AP 430 of Fig. 4a, and thus it may be checked in action 220 whether the first set of data 431 being associated with identifier 15 is near to the first estimation of the position of the mobile device 2-3 and/or whether the second set of data 432 being associated with identifier I5 is near to the first estimation of the position of the mobile device 2-3. As an example, access point 4-5 may be a relocated access point which was formerly positioned at the first position such that the first set of data 431 is associated with the first position and then may have been repositioned to a second position which is the position of the access point 4-5 in Fig. 3, wherein the second set of data 432 is associated with the second position. Therefore, as an example, the second location of the second set of data 432 being associated with identifier I5 may be considered to be within a predefined distance compared to the first estimation of the position of the mobile device 2-3 and/or the first location of the first set of data 431 being associated with identifier 15 may not be considered to be within a predefined distance compared to the first estimation of the position of the mobile device 2-3 and thus the second set of data 431 being associated with identifier I5 and associated with access point 4-5 (and AP1 410 in this example) is selected in action 220.

And/or, as an example embodiment of action 220, said selecting, at least partially based on the first estimation of the position of a mobile device, data associated with at least one access point of a second set of one or more access points, comprises, for each identifier of at least one identifier of at least one identifier obtained by the mobile device, selecting (or trying to select) data associated with the respective identifier which (the data) is associated with a position near to the first estimation of the position of the mobile device.

For instance, in action 220 apparatus 100 may use received radio signal parameters of observable radio signals received by the mobile device, and may use at least one identifier of at least one access point of the received radio signal parameters in order to try to identify at least one access point of the second set of one or more access points, and then, for each identifier of the at least one identified identifier of the received at least one identifier it may be checked whether there is data associated with the respective identifier which (the data) is associated with a position near to the first estimation of the position of the mobile device, and if yes, this data associated with the respective identifier which (the data) is associated with a position near to the first estimation of the position of the mobile device is selected in action 220.

For instance, an identifier of an access point of the second set of one or more access points is associated with a first set of data being associated with a first location and at least one second set of data, wherein each second set of data of the at least one second set of data is associated with a respective second location (being different from the first location), wherein, of there are two or more second locations, these second location differ from each other. Then, as an example, for each identifier of the at least one identified identifier of the received at least one identifier that set of data of the first set of data being associated with the respective identifier and of the at least one second set of data being associated with the respective identifier may be considered to be near to the first estimation of the position of the mobile device which is associated with the nearest location with respect to the first estimation of the position, i.e., it may be checked which location of the first location of the first set of data (associated with the respective identifier) and any second location of a respective second set of data of the at least one second set of data (associated with the respective identifier) is nearest to the first estimation of the mobile device such that the set of data of the first set of data and the at least one second set of data is selected in action 220 which is considered to be nearest to the first estimation of the mobile device. This may be performed for each (or at least one) identifier received by the mobile device which is associated with an access point of the second group of access points. Furthermore, as an example, it may be further checked if the nearest location of the first location of the first set of data (associated with the respective identifier) and any second location of a respective second set of data of the at least one second set of data (associated with the respective identifier) (i.e. nearest compared to the first estimation of the mobile device) is within a predefined distance compared to the first estimation of the mobile (e.g. as explained above with respect to the preceding example embodiment), and if not, then no set of data for this respective identifier may be selected in action 220 (otherwise the data associated with the nearest location of the first location of the first set of data and any second location of a respective second set of data of the at least one second set of data associated with the respective identifer may be selected in action 220).

As an non-limiting example with respect to Fig. 3, mobile device 2-3 may receive radio signal parameters of observable radio signals from access point 4-3 including the identifier 13 of access point 4-3, from access point 4-4 including the identifier 14 of access point 4-4 and from access point 4-5 including the identifier I5 of access point 4-5. It may be assumed that access point 4-5 is of the second set of one or more access points, wherein, for instance, access points 4-5 may be AP1 410 or AP2 420 depicted in Fig. 4a or AP 430 depicted in Fig. 4b. In action 220, it may be determined that received identifier I5 is associated with an access point of the second set of one or more access points, and then it may be checked whether there is data associated with respective identifier I5 being associated with a location near to the first estimation of the position of the mobile device 2-3, e.g. as explained above.

For instance, under the exemplarily assumption that access point 4-5 is access point AP1 410 of Fig. 4a and thus a duplicate access points, and thus the first location associated with the first set of data 411 of AP1 410 is the location of access points 4-5, in action 220 based on the received identifier 15 (which is associated with an access point 4-5 of the second group of one or more access points) selecting (or trying to select) data is selected which is associated with the respective identifier I5 and which (the data) associated with a position near to the first estimation of the position of the mobile device 2-3, e.g. by means of determining which set of data of the first set of data 411 being associated with identifier I5 and the second set of data 421 being associated with identifier I5 is considered to be associated with the nearest location with respect to the first estimation of the position of the mobile device 2-3, i.e. it may be checked whether the first location of the first set data 411 or the second location of the second set of data 421 is considered to be the nearest location compared to the first estimation of the mobile device.

As an example, the first set of one or more access points and the data associated with each access point of the first set of one or more access points, wherein this data may comprise the data used in action 210 to determine a first estimation of the position of the mobile device and/or the data which is intended to be used for positioning, may be stored in a database, e.g. a database in server 3 and/or in any of the mobile devices, e.g. one or more of mobile devices 2-1, 2-2, 2-3 and/or in apparatus 100. This database may comprise the above mentioned radio map which may be used in action 210 and which might comprise the data associated with each access point of the first set of one or more access points. And/or, for instance, this database may comprise the second set of one or more access points and the data associated with each access point of the second set of one or more access points, e.g. the above mentioned first set of data associated with an identifier of an access point of the second set of access points and the at least one second set of data associated with this identifier. For instance, the database may comprise for the identifier of each access point of the second set of one or more access points the first set of data associated with the respective identifier the at least one second set of data associated with the respective identifier. As an example, the second set of one or more access points and the data associated with each access point of the second set of one or more access points may also be considered to be, at least partially (e.g. depending on the location of the respective data), part of the above mentioned radio map. Furthermore, as an example, this database may be maintained and updated by server 3, wherein server 3 may be configured to transmit the database (e.g. the updated database) to a respective mobile device 2-1, 2-2, 2-3 and/or apparatus 100.

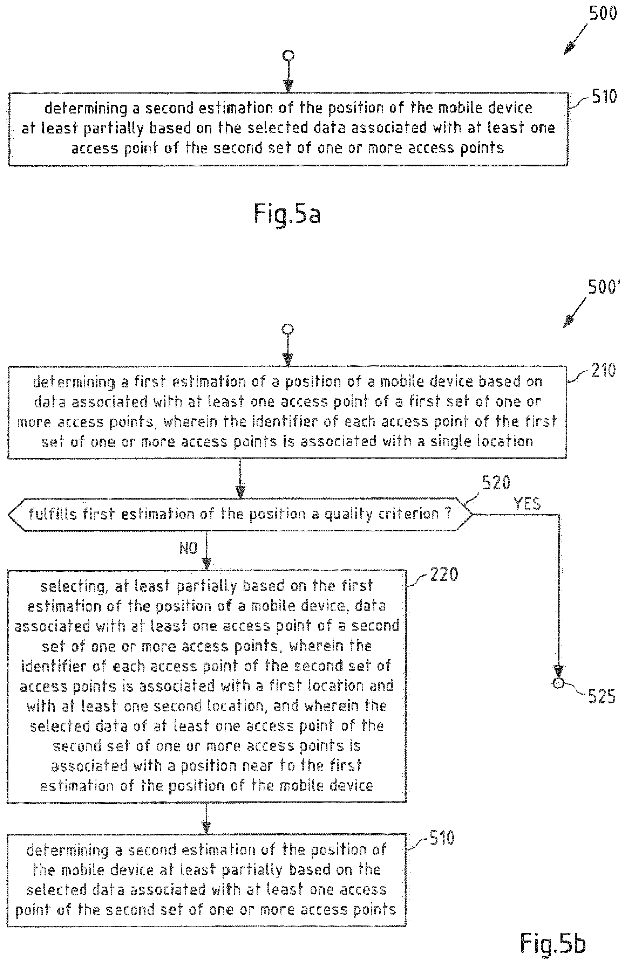

Fig. 5a is a flow chart 500 illustrating an exemplary embodiment of a method 500 according to the invention, wherein this flow chart 500 may be performed after method 200 has been performed, in particular after said selecting, at least partially based on the first estimation of the position of a mobile device, data associated with at least one access point of a second set of one or more access points in action 220. Without limiting the scope of the invention, it is assumed in the following that the apparatus 100 as described above with respect to Fig. 1 performs the steps of flow chart 500, wherein apparatus 100 may be a mobile device (e.g. one of mobile devices 2-1, 2-2, 2-3 or another mobile device or a server, e.g. server 3).

Method 500 comprises determining a second estimation of the position of the mobile device at least partially based on the selected data associated with at least one access point of the second set of one or more access points (action 510).

Thus, the data associated with at least one access point of the second set of one or more access points that has been selected in action 220 of method 200 can be used to perform a second estimation of the position of the mobile device which might lead to a better estimation of the mobile device compared to the first estimation of the position of the mobile device performed in action 210 of method 200 since additional data, i.e., the data associated with at least one access point of the second set of one or more access points that has been selected in action 220 is used.

As an example, the data associated with at least one access point of the first set of one or more access points that has been used in action 210 may be used together with the data associated with at least one access point of the second set of one or more access points that has been selected in action 220 may be used to perform the second estimation of the position of the mobile device in action 510. For instance, apparatus 100 may use radio signal parameters of observable radio signals received by mobile device (e.g. received at the position to be determined) in order to determine the second estimation of a position of the mobile device in action 210 and the data associated with at least one access point of the first set of one or more access points that has been used in action 210 together with the data associated with at least one access point of the second set of one or more access points that has been selected in action 220 for performing the second estimation of the position of the mobile device, e.g. based on a radio map as has already been explained.

For instance, with respect to an example presented with respect to action 210, mobile device 2-3 of Fig. 3 may receive radio signal parameters of observable radio signals from access point 4-3 including the identifier I3 of access point 4-3, from access point 4-4 including the identifier I4 of access point 4-4, and from access point 4-5 including the identifier I5 of access point 4-5, wherein in action 210 data associated with access point 4-3 and data associated with access point 4-4 was used for determining the first estimation of the mobile device 2-3 since access point 4-5 is an access point of the second group of one or more access points. Then, in action 220 data associated with access point 4-5 was selected, e.g. the first set of data 411 of AP1 410 in the example case of a duplicate access point 4-5 or the second set of data 432 of AP 430 in case of a relocated access point 4-5. Thus, for instance, in action 510 the data associated with access point 4-3, the data associated with access point 4-4 and the selected data associated with access point 4-5 (selected in action 220) might be used for performing the second estimation of the position of mobile device 2-3, wherein it might be assumed that this second estimation has a better quality than the first estimation of the position of the mobile device 2-3 since more access points are used for position estimation, e.g. in the radio map.

And/or, as an example, the first estimation of a position of a mobile device determined in action 210 may be corrected/adjusted based on the data associated with at least one access point of the second set of one or more access points that has been selected in action 220.

Thus, for instance, it can be achieved that even those access points can be used for positioning being associated with an identifier which shows ambiguity regarding the location of the access point since the identifier is associated with a first location (e.g. a first set of data 411, 431 associated with a first location and the identifier) and at least one second location, wherein each second location of the at least one second location may be associated with a separate second set of data 421, 432 associated with the respective second location and the identifier.

Fig. 5b is a flow chart 500' illustrating an exemplary embodiment of a method 500' according to the invention, wherein this flow chart 500' may be part or may comprise method 200. Without limiting the scope of the invention, it is assumed in the following that the apparatus 100 as described above with respect to Fig. 1 performs the steps of flow chart 500', wherein apparatus 100 may be a mobile device (e.g. one of mobile devices 2-1, 2-2, 2-3 or another mobile device or a server, e.g. server 3).

In action 210 of method 500', apparatus 100 determines a first estimation of a position of a mobile device based on data associated with at least one access point of a first set of one or more access points, wherein the identifier of each access point of the first set of one or more access points is associated with a single location, wherein this action 210 may correspond to action 210 of method 200 - and therefore all explanations given with respect to action 210 of method 200, in particular together with system 300 in Fig. 3 may also hold for action 210 of method 500'.

Then, after determining the first estimation of the position of the mobile device (action 210), it is checked whether the first estimation of the position fulfills a quality criterion (action 520). If said checking yields a negative result, selecting, at least partially based on the first estimation of the position of a mobile device, data associated with at least one access point of a second set of one or more access points is performed, wherein the identifier of each access point of the second set of access points is associated with a first location and with at least one second location, and wherein the selected data of at least one access point of the second set of one or more access points is associated with a position near to the first estimation of the position of the mobile device (action 220), and, optionally, determining a second estimation of the position of the mobile device at least partially based on the selected data associated with at least one access point of the second set of one or more access points (action 510). This action 220 of method 500' may correspond to action 220 of method 200 - and therefore all explanations given with respect to action 220 of method 200, in particular together with system 300 in Fig. 3 and/or the access points of Fig. 4a and/or Fig. 4b may also hold for action 220 of method 500'. Optional action 510 of method 500' may correspond to action 510 of method 500 - and therefore all explanations given with respect to action 510 of method 500 may also hold for action 510 of method 500'.

Thus, with respect to this exemplary embodiment of method 500', said selecting, at least partially based on the first estimation of the position of a mobile device, data associated with at least one access point of a second set of one or more access points is performed, wherein the identifier of each access point of the second set of access points is associated with a first location and with at least one second location, and wherein the selected data of at least one access point of the second set of one or more access points is associated with a position near to the first estimation of the position of the mobile device in action 220 is only performed if the first estimation of the position of the mobile device performed in action 210 does not fulfil the quality criterion. If the quality criterion is fulfilled, method 500' may proceed at reference sign 525 without selecting, at least partially based on the first estimation of the position of a mobile device, data associated with at least one access point of a second set of one or more access points is performed, wherein the identifier of each access point of the second set of access points is associated with a first location and with at least one second location, and wherein the selected data of at least one access point of the second set of one or more access points is associated with a position near to the first estimation of the position of the mobile device (action 220), and, if implemented, without determining a second estimation of the position of the mobile device in action 510 since it can be assumed that the quality of the first estimation of the mobile device is sufficient.

As an example embodiment of method 500', said checking performed in action 520 yields a negative result if the number of access points used for determining the first estimation of the position of the mobile device is less than a predefined number. Thus, the quality criterion may be associated with a predefined number of access points, and if the number of access point(s) used in action 210 for determining the first estimation of the position of the mobile is less than the predefined number, it is assumed in action 520 that the quality criterion is not fulfilled. For instance, the predefined number of access points may be 3, or 4, or 5, or 6, or 7, or 8 or 9 or 10 or any other well-suited number.

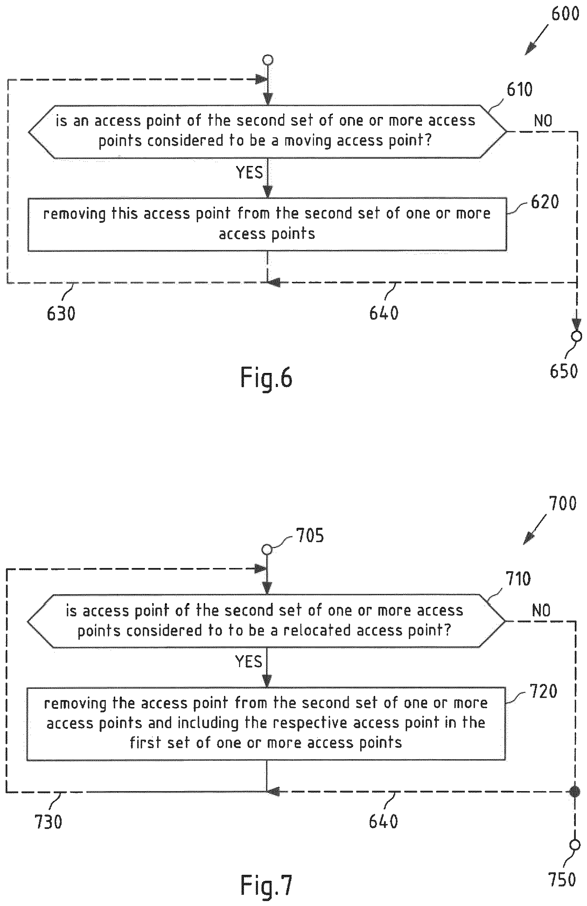

Fig. 6 is a flow chart 600 illustrating an exemplary embodiment of a method 600 according to the invention. Without limiting the scope of the invention, it is assumed in the following that the apparatus 100 as described above with respect to Fig. 1 performs the steps of flow chart 600, wherein apparatus 100 may be a mobile device (e.g. one of mobile devices 2-1, 2-2, 2-3 or another mobile device or a server, e.g. server 3). In particular, for instance, method 600 may be performed by a server, e.g. by server 3, and in particular, this server may store the above mentioned database comprising the second set of one or more access points and the data associated with each access point of the second set of one or more access points, wherein this database may further comprise the first set of one or more access points and the data associated with each access point of the first set of one or more access points.

Method 600 may be considered to represent an example method for updating the database comprising the second set of one or more access points and the data associated with each access point of the second set of one or more access points.

It is checked if an access point of the second set of one or more access points is considered to be a moving access point (action 610), and if this checking yields a positive result, this access point is removed from the second set of one or more access points (action 620).

For instance, a moving access points may represent an access point which is considered to moving from a first location to a second location and then to a third location or back to the first location and, for instance, to at least one fourth location (the first, second and third location being different from each other), e.g. an access points which may be considered to provide uncertainty regarding its (e.g. actual) location. As an example, a mobile device representing a hot spot as access point, wherein the mobile device is moved to different locations in order to establish a hot spot at the respective location might be considered to represent a moving access point. For instance, such a mobile device considered to be moving access point may be a specific type of the above mentioned first example case, since a first set of data associated with the identifier of the access point may be associated with a first location, and each set of data of at least one set of data associated with the identifier of this access point may be associated with a different second location. However, since it may be assumed that first set of data associated with the identifier of the access point and the each set of data of at least one set of data associated with the identifier of this access point may be associated with locations representing "old" locations not representing the actual location of the mobile device (since the mobile device may have been moved once again compared to the last location), it may be desirable to remove this access point being considered to be a moving access point from the second set of one or more access points in order to avoid that data associated with this access points is used for estimation the second position in action 220.

Thus, if the checking in action 610 yields a positive result, the respective access point considered to be a moving access point is removed from the second set of one or more access points in action 620, e.g. removed from the database. Furthermore, this removing may also comprise removing the data associated with this access point from the database.

If said checking in action 610 yields a positive result, method 600 may go to reference sign 650, e.g. without updating the database, or, method 600 may go back to action 610, e.g. after a predetermined time period and/or if there was an update regarding the second set of one or more access points, in order to check if there is now an access points of the second of one or more access points considered to be a moving access points.

After action 620 is performed, method 600 may jump back to action 610 in order to check whether there is another access points of the second set of one or more access points considered to be a moving access point.

As an example embodiment of method 600, an access point of the second set of one or more access points is considered to be a moving access point in action 610 if a first set of data associated with the identifier of the respective access point is associated with a first location and a first point in time or a first time period, and each set of data of at least two second sets of data associated with the identifier of the respective access point is associated with a respective second location and a respective second point in time or second time period, and if at least one of the following holds for the respective access point (or if all two conditions hold):
(a-i) the maximum time difference between the first point in time (associated with the identifier of the respective access point), and each second point in time of the at least two second points in time (associated with the identifier of the respective access point) or between the first time period (associated with the identifier of the respective access point), and each second time period of the at least two second points (associated with the identifier of the respective access point) in time is below a predefined time threshold;
(a-ii) the maximum distance between the first location (associated with the identifier of the respective access point), and each second location of the at least two second locations (associated with the identifier of the respective access point) is below a predefined distance threshold.

For instance, the first set of data associated with the identifier of the respective access point may be configured (or intended) to be used for radio positioning and may be part of a radio map (e.g. as explained above) and each set of data of at least two second sets of data associated with the identifier of the respective access point may be configured (or intended) to be used for radio positioning and may be part of a radio map (e.g. as explained above).

As an example, the predefined time threshold may be 1 day, 3 days, 1 week, 2 weeks, one month or any other well suited time threshold. Accordingly, if the maximum time difference between the first point in time, and each second point in time of the at least two second points in time or between the first time period, and each second time period of the at least two second points in time is below the predefined time threshold, it may be assumed that the access is moved quickly and therefore the different locations are not caused be a relocation (e.g. a relocation from a first location (e.g. at a fixed position in first apartment) to a second location (e.g. a fixed position in a second apartment) and to a third location (e.g. at a fixed position in third apartment)) since it might be assumed that it is not realistic of two relocations within the predefined distance threshold, but that the different locations are cause by creating hot spots (e.g. tethering) at the respective locations.

And/or, the predefined distance threshold may be 2km, 3km, 5km, 10km, 15km, 30km, 50km or any other well suited distance threshold. E.g., if the maximum distance between the first location (associated with the identifier of the respective access point), and each second location of the at least two second locations (associated with the identifier of the respective access point) is below the predefined distance threshold it may be assumed that the movement is within an predefined area not having a big extension (e.g. a city or town) such that it might be assumed that the apparatus created hot spots (e.g. tethering) at the different locations and thus represent a moving access points.

For example, access point 4-1 depicted in Fig. 3 may be associated with an identifier ID1, and first set of data (associated with identifier ID1) may be associated with a first location. Furthermore, there may be two second sets of data associated with identifier ID1 (and with access point 4-1), wherein a first second set of data of the two second sets of data may be associated with a first second location L_{2,1} (e.g. a second location) and wherein a second second set of data of the two second sets of data may be associated with a second second location L_{2,2} (e.g. a third location), wherein the first location, the first second location L_{2,1} and the second second location L_{2,2} differ from each other. For instance, access point 4-1 is part of a mobile device and represents a hot spot, wherein this hot spot first was created at the first location and a first point in time t₁ and/or during a first time period [t_{1,start} ... t_{1,stop]}. Then, mobile device 4-1 may have been moved from the first location to the first second location L_{2,1} and a hotspot acting as an access point with the same identifier ID 1 was created at the first second location and a first second point in time t_{2,1} and/or during a first second time period [t_{2,1,start} ... t_{2,1,stop}] (wherein t_{2,1} > t₁ and t_{2,1,start} > t_{1,stop}). Then, mobile device 4-1 may have been moved from the first second location L_{2,1} to the second second location L_{2,2} and a hotspot acting as an access point with the same identifier ID1 was created at the second location and a second second point in time t_{2,1} and/or during a second second time period [t_{2,2,start} ... t_{2,2,stop}] (wherein t_{2,2} > t_{2,1} and t_{2,2,start} > t_{2,1,stop}).

Then, for instance, with respect to the example above if the maximum time difference between the first point in time, and each second point in time of the at least two second points in time, i.e. t_{2,2}-t₁, is below the predefined time threshold the access point 4-1 may be considered to represent a moving access point in action 610, and/or if the maximum time difference between the first time period, and each second time period of the at least two second points in time, e.g. t_{2,2,start} - t_{1,stop}, is below the predefined time threshold the access point 4-1 may be considered to represent a moving access point in action 610.

And/or, for instance, with respect to the example above, if the maximum distance between the first location (associated with the identifier of the respective access point), and each second location of the at least two second locations (associated with the identifier of the respective access point) is below the predefined distance threshold the access point 4-1 may be considered to represent a moving access point in action 610.

As an example embodiment, e.g. as part of method 600 (e.g. action 610) but also disclosed in general and not restricted to method 600, an access point of the second set of one or more access points is considered not to be a moving access point if one or more of the following holds:
- condition (i): a first set of data associated with the identifier of the respective access point is associated with a first location and a first point in time or a first time period, and a second set of data associated with the identifier of the respective access point is associated with a second location and a second point in time or second time period, and wherein the distance between the first location and the second location is larger than a predefined distance threshold and a time period between the first point in time and the second point in time or between the first time period and the second time period is smaller than a predefined time threshold;
- condition (ii): a first set of data associated with the identifier of the respective access point is associated with a first location and a first point in time or a first time period, and a second set of data associated with the identifier of the respective access point is associated with a second location and a second point in time or second time period, the second point in time being later than the first point in time or the second time period being later than the first time period, and wherein no data associated with the identifier is associated with the first location and a point in time or time period being later than the second point in time or the second time period.

For instance, with respect to condition (i), the predefined distance threshold may be 100km, 200km, 400km, 500km, 800km, 1000km, 2000km or any other well suited distance threshold, and the predefined time threshold may be 1 minute, 5 minutes, 10 minutes, 30 minutes, 1 hour, 2 hours, 3 hours, 5 hours, 12 hours, 1 day, 2 days or any other well-suited predefined time threshold. Thus, if a first set of data associated with the identifier of the respective access point is associated with a first location and a first point in time or a first time period, and a second set of data associated with the identifier of the respective access point is associated with a second location and a second point in time or second time period, and the distance between the first location and the second location is larger than the predefined distance threshold and a time period between the first point in time and the second point in time or between the first time period and the second time period is smaller than the predefined time threshold it may be assumed that the identifier of the respective access point is associated with a duplicate access point, e.g. as explained with respect to Figs. 4a and access points AP1 410 and AP 420, since it can be considered to be unlikely that the same access point has moved from the first location to the second location (wherein the distance between the first location and the second location is larger than the predefined distance threshold) within the predefined time threshold. Therefore, the respective access point associated with this identifier is not considered to be a moving access point but may be considered to represent a duplicate access point (e.g. the above mentioned first case explained with respect to Fig. 4a) and thus may be considered to be a helpful access point which can be maintained in the second set of one or more access points, or, if not included so for in the second set of one or more access points, it may be included in the second set of one or more access points.

Furthermore, it has to be understood that the first point in time associated with the first set of data associated with the identifier of the respective access point may be a first point in time of any data of the first set of data, since for example the first set of data may comprise several fingerprints collected at the first position at different point in times, and similar, the second point in time associated with the second set of data associated with the identifier of the respective access point may be a second point in time of any data of the first set of data, since for example the second set of data may comprise several fingerprints collected at the second position at different point in times.

E.g., an access point (e.g. of the first set of one or more access points and/or of the second set of one or more access points) is associated with a mobile country code, wherein, in particular, data associated with the access point is associated with the mobile country code.

For instance, an access point may be associated with a MCC, e.g. access point AP1 410 with a first MCC and access point AP 420 with a second MCC. Then, data associated with the respective access point, e.g. the first set of data 411 associated with the access point AP1 410 and/or the second set of data 421 associated with the access point AP2 420 and/or the first set of data 431 and the second set of data 432 associated with the access point AP 430), may be associated with MCC of the respective access point. Thus, for instance, the first set of data 431 associated with access point AP 430 and the second set data 432 (e.g. each second set of the at least one second set of data) associated with access point AP 430 may be associated with the same MCC being associated with access point AP 430.

As an example, with respect to condition (ii), if a first set of data associated with the identifier of the respective access point is associated with a first location and a first point in time or a first time period, and a second set of data associated with the identifier of the respective access point is associated with a second location and a second point in time or second time period, and if the second point in time being later than the first point in time or the second time period being later than the first time period, and if no data associated with the identifier is associated with the first location and a point in time or time period being later than the second point in time or the second time period, then it may be assumed that the identifier of the respective access point is associated with a relocated access point, e.g. as explained with respect to the example of access point AP 430 in Fig. 4b, and thus the access point may be considered not to represent a moving access point.

For example, as exemplarily explained with respect to access point AP 430 in Fig. 4b, a first set of data 431 is associated with the access point AP 430 and thus with the identifier of AP 430, and a second set of data 432 is associated with access points AP 430 and thus with the identifier of AP 430. The first set of data 431 may be associated with a first point in time t₁, wherein the first point in time t₁ may be a point in time of any data of the first set of data 431, e.g. a fingerprint in the first set of data 431, or may be a kind of average point in time being associated with the time when said first set of data 431 was obtained based on observations (e.g. fingerprints) from the access point. And/or, the first set of data 431 may be associated with a first time period [t_{1,start} ... t_{1,stop}], wherein t_{1,start} may represent the time of the first observation (e.g. the first fingerprint of the access point) of the respective access point and t_{1,stop} may represent the time of the last observation (e.g. the last fingerprint of the access point) of the respective access point used for creating and/or obtaining the first set of data. Similarly, the second set of data 432 may be associated with a second point in time t₂, wherein the second point in time t₂ may be a point in time of any data of the second set of data 432, e.g. a fingerprint in the second set of data 432, or may be a kind of average point in time being associated with the time when said second set of data 432 was obtained based on observations (e.g. fingerprints) from the access point. And/or, the second set of data 432 may be associated with a second time period [t_{2,start} ... t_{2,stop}]., wherein t_{2,start} may represent the time of the first observation (e.g. the first fingerprint of the access point) of the respective access point and t_{2,stop} may represent the time of the last observation (e.g. the last fingerprint of the access point) of the respective access point used for creating and/or obtaining the second set of data 432.

In the example presented with respect to AP 430 in Fig. 4b it was assumed that AP 430 was first positioned at a first location such that the first set of data 431 is associated with this first location and that then AP 430 was relocated to a second position such that the second set of data 432 is associated with this second location. Therefore, in this example, the second point in time t₂ is later than the first point in time t₁ and the second time period [t_{2,start} ... t_{2,stop}] is later than the first time period [t_{1,start} ... t_{1,stop}]. For instance, it is assumed that the second time period [t_{2,start} ... t_{2,stop}] is later than the first time period [t_{1,start} ... t_{1,stop}] if t_{2,start} or t_{2,stop} is later than the end of the first time period, i.e., t_{2,start} or t_{2,stop} later than t_{1,stop}. And/or, for instance, it is not assumed that the second time period [t_{2,start} ... t_{2,stop}] is later than the first time period [t_{1,start} ... t_{1,stop}] if t_{2,start} is before t_{1,stop}.

Furthermore, according to condition (ii), if the second point in time t₂ is later than the first point in time t₁ and/or the second time period [t_{2,start} ... t_{2,stop}] is later than the first time period [t_{1,start} ... t_{1,stop}], and if no data (e.g. usable (or intended) for radio positioning) associated with the identifier is associated with the first location and a point in time or time period being later than the second point in time or the second time period it is assumed that the respective access point (associated with the identifier) is not a moving access point, but, e.g., a relocated access point. If there would be data associated with the identifier is associated with the first location and a point in time or time period being later than the second point in time or the second time period it might be assumed that the position of the access point switches between the first and second time period and thus the access point might be assumed to be a moving access point and might not be assumed to be a relocated access point.

For instance, at least one (or all) of said conditions (i) and (ii) may be part of action 610. For instance, if one condition of said conditions (i) and (ii) is considered to be fulfilled for a respective access point in action 610, method 600 may proceed with reference sign 650 or may jump back via arrow 640 to a new action 610 for checking for another access point of the second set of one or more access points whether this is an access point considered to be a moving access point.

Fig. 7 is a flow chart 700 illustrating an exemplary embodiment of a method 700 according to the invention. Without limiting the scope of the invention, it is assumed in the following that the apparatus 100 as described above with respect to Fig. 1 performs the steps of flow chart 600, wherein apparatus 100 may be a mobile device (e.g. one of mobile devices 2-1, 2-2, 2-3 or another mobile device or a server, e.g. server 3). In particular, for instance, method 700 may be performed by a server, e.g. by server 3, and in particular, this server may store the above mentioned database comprising the second set of one or more access points and the data associated with each access point of the second set of one or more access points, wherein this database may further comprise the first set of one or more access points and the data associated with each access point of the first set of one or more access points.

Method 700 may be considered to represent an example method for updating the database comprising the second set of one or more access points and the data associated with each access point of the second set of one or more access points.

It is checked if an access point of the second set of one or more access points is considered to be a relocated access point (action 610), wherein this checking may comprise checking if it is detected that a first set of data associated with the identifier of the respective access point (of the second set of one or more access points) is associated with a first location and a first point in time or a first time period, and a second set of data associated with the identifier of the respective access point is associated with a second location and a second point in time or second time period, the second point in time being later than the first point in time or the second time period being later than the first time period, and wherein no data associated with the identifier is associated with the first location and a point in time or time period being later than the second point in time or the second time period (i.e., the above mentioned condition (ii)).

If this checking (action 710) yields a positive result method 700 may proceed with removing the respective access point from the second set of one or more access points and including the respective access point in the first set of one or more access points (action 720). Furthermore, optionally, action 720 may comprise removing or ignoring the first set of data associated with the identifier of the respective access point. Thus, an access point of the second set of one or more access points which has been identified to be relocated access point, e.g. relocated from the first position associated with the first set of data associated with the identifier of this access point to the second position associated with the second set of data associated with the identifier of this access point, can be removed from the second set of access points and can be included in the first set of access point, since the first set of data being associated with the identifier can now be neglected as being not useful anymore (the access point is no longer located at the first location), and therefore this first set of data being associated with the identifier may be removed or labeled not to be used anymore or ignored and the access point can be included in the first set of one or more access points wherein the second set of data associated with the identifier can be assumed to represent a set of data associated with this access point useful or intended to be use for radio position, in particular in action 210, e.g. when using the updated database. Thus, action 720 may be considered to be part of updating the above mentioned database comprising the second set of one or more access points and the data associated with each access point of the second set of one or more access points and comprising the first set of one or more access points and the data associated with each access point of the first set of one or more access points.

If an access point is not considered to be a relocated access point in action 710, the method 700 may proceed at reference sign 750 or may jump back via arrow 740 to action 710 in order check if another access point of the second set of one or more access points is considered to be relocated access point. For instance, method 600 may jump from reference sign 650 to reference sign 705, wherein in this example the access point checked in 710 to be relocated access point is the access point that has been previously determined not to be a moving access point in preceding action 610 of method 600.

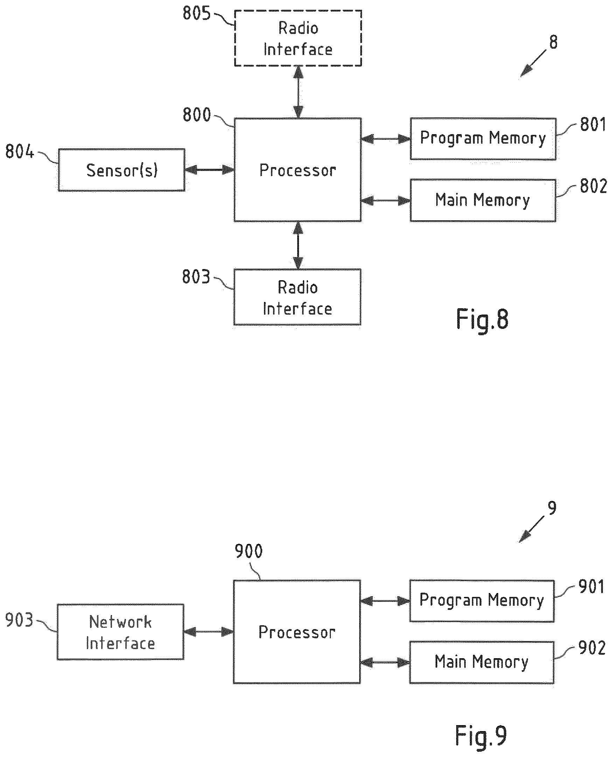

Fig. 8 is a block diagram of an exemplary embodiment of mobile device 8 according to the invention. In the following, it is assumed that mobile devices 2-1 to 2-3 of Fig. 2a corresponds to this mobile device 8 without any limitations.

Mobile device 8 comprises a processor 800. Processor 800 may represent a single processor or two or more processors, which are for instance at least partially coupled, for instance via a bus. Processor 800 executes a computer program code stored in program memory 801 (e.g. computer program code causing mobile device 8 to perform any one embodiment of the disclosed method (e.g. the steps of any one embodiment of the disclosed method) or a part thereof (e.g. at least some steps of any one embodiment of the disclosed method) (in particular method 200 and/or method 500 and/or method 500' and/or method 600 and/or method 700 as described with respect to of Figs. 2, 5a, 5b, 6 and 7), when executed on processor 800), and interfaces with a main memory 802. Program memory 801 may also contain an operating system for processor 800 and radio map information representing a radio map of the predetermined environment system 300. Some or all of memories 801 and 802 may also be included into processor 800. One of or both of memories 801 and 802 may be fixedly connected to processor 800 or at least partially removable from processor 800, for example in the form of a memory card or stick.

A program memory (e.g. program memory 801) may for example be a non-volatile memory. It may for instance be a FLASH memory (or a part thereof), any of a ROM, PROM, EPROM, MRAM or a FeRAM (or a part thereof) or a hard disc (or a part thereof), to name but a few examples. For example, a program memory may for instance comprise a first memory section that is fixedly installed, and a second memory section that is removable, for instance in the form of a removable SD memory card.

A main memory (e.g. main memory 802) may for example be a volatile memory. It may for example be a DRAM memory, to give non-limiting example. It may for instance be used as a working memory for a processor (e.g. processor 800) when executing an operating system and/or programs.

Processor 800 further controls a radio interface 803 configured for receiving and, optionally, transmitting radio signals. A radio interface may be or may comprise a radio receiver circuit and/or a radio transmitter circuit and/or a radio transceiver circuit. Such circuits may comprise modulators, filters, mixers, switches and/or one or more antennas to allow transmission and/or reception of radio signals.

In the following, it is assumed for exemplary purposes that radio interface 803 is a Wi-Fi transceiver configured to transmit and receive Wi-Fi radio signals, e.g. in line with any current or future version of any of the IEEE 802.11 standards (e.g. /. for example specified by the standards of the IEEE 802.11 family (http://www.ieee.org/) or any other Wi-Fi standard. Radio interface 803 enables mobile device 8 to scan for observable Wi-Fi radio signals transmitted (e.g. broadcasted) by access points 4-1 to 4-5 of system 300. Therein, a Wi-Fi radio signal may be understood to be observable if the Wi-Fi radio signal is receivable with a minimum quality (e.g. a minimum signal-to-noise ratio and/or a minimum signal power, e.g. at least -90 dBm or -95 dBm). Moreover, the Wi-Fi transceiver is configured, alone or together with processor 800, to determine one or more radio signal parameters of Wi-Fi radio signals observed (e.g. received) when scanning for observable radio signals. To this end, the Wi-Fi transceiver may for example extract, from each observed Wi-Fi radio signal, the respective identifier contained therein ((e.g. Wi-Fi MAC address or basic service set identification (BSSID) or other universally unique identifier (UUID)) and measure the respective received signal strength of each observed Wi-Fi radio signal. The extracted identifiers and the received signal strength values may then for example be provided to processor 800 as scanning results. It is to be understood that any computer program code required for receiving and processing received Wi-Fi radio signals may be stored in an own memory of the radio interface 803 and executed by an own processor of the radio interface 803 or it may be stored for example in memory 802 and executed for example by processor 800.

Moreover, for instance, mobile device 8 may comprise one or more sensors 804, and the processor 800 controls the one or more sensors 804 configured for determining sensor information indicating a movement of mobile device 8. The determined sensor information may be provided to processor 800. Therein, sensor information indicating a movement of the mobile device may be any information (e.g. qualitatively or quantitatively) representing an event or change in the environment of mobile device 8 detected by a sensor that is indicative (e.g. characteristic) for a movement of mobile device 8. An event or change in the environment of mobile device 8 may for example be an event associated with or a change of a physical quantity (e.g. acceleration, orientation, shock, speed, etc.) that is characteristic for a movement of mobile device 8.

Examples of sensors 804 are a GNSS sensor (e.g. a GPS sensor and/or a Galileo sensor), an inertial or motion sensor (e.g. a speed sensor, an acceleration sensor, a shock sensor, an activity or step sensor, an orientation sensor like a compass or a gyroscope), an optical sensor (e.g. a camera), or a combination thereof.

Processor 800 further controls an optional radio interface 805 configured to communicate via a cellular radio network (e.g. to transmit and receive cellular radio signals). For example, radio interface 805 may be or may comprise a 2G/3G/4G/5G radio transceiver. Mobile device 8 may use radio interface 805 to communicate with positioning server 3 of system 300 (e.g. via the internet). For example, mobile device 8 may use radio interface 805 to transmit radio fingerprint observation reports to positioning server 3 and/or receive radio map information from positioning server 3.

The components 801 to 805 of mobile device 8 may for instance be connected with processor 800 by means of one or more serial and/or parallel busses.

It is to be understood that mobile device 8 may comprise various other components like a user interface for receiving user input

Fig. 9 is a block diagram of an exemplary embodiment of a server 9 according to the invention, which may (for instance) represent a positioning server. In the following, it may be assumed that server 3 of system 300 of Fig. 2b corresponds to this server 9. Furthermore, server 9 may be considered to represent a cloud component or server 9 may be considered to represent apparatus 100 of Fig. 1.

Server 9 comprises a processor 900. Processor 900 may represent a single processor or two or more processors, which are for instance at least partially coupled, for instance via a bus. Processor 900 executes a computer program code stored (e.g. computer program code causing server 9 to perform any one embodiment of the disclosed method (e.g. the steps of any one embodiment of the disclosed method) or a part thereof (e.g. at least some steps of any one embodiment of the disclosed method) (in particular method 200, and/or method 500 and/or method 500' and/or method 600, and/or method 700 as described with respect to of Figs. 2, 5a, 5b, 6 and 7), in program memory 901, and interfaces with a main memory 902.

Program memory 901 may also contain an operating system for processor 900 and, for instance, radio map information representing a radio map of the predetermined environment system 300. Some or all of memories 901 and 902 may also be included into processor 900. One of or both of memories 901 and 902 may be fixedly connected to processor 900 or at least partially removable from processor 900, for example in the form of a memory card or stick.

Processor 900 further controls a network interface 903 which is configured to communicate via a communication network (e.g. the internet). Server 3 may use network interface 903 to communicate with mobile devices 2-1 to 2-3 of Fig. 2b (e.g. via the internet). For example, positioning server 9 may use network interface 903 to receive radio fingerprint observation reports from mobile devices 2-1 to 2-3 and/or transmit radio map information to mobile devices 2-1 to 2-3, in particular the above mentioned database comprising the first set of one or more access points and the data associated with each access point of the first set of one or more access points and comprising the second set of one or more access points and the data associated with each access point of the second set of one or more access points. Furthermore, for instance, positioning server 9 may use network interface 903 to receive the radio fingerprint observation reports indicating an observation position within the predetermined environment and the e.g. Wi-Fi MAC address or basic service set identification (BSSID) or other universally unique identifier (UUID) contained in or represented by the radio signals transmitted by access points 4-1 to 4-5 (and/or transmitted by other access points not depicted in Fig. 3) observable at the observation position. The collected radio fingerprint observation reports may be provided (e.g. transmitted) by the mobile devices to server 9 for determining a radio map including the above mentioned database.

The components 301 to 303 of positioning server 3 may for example be connected with processor 300 by means of one or more serial and/or parallel busses.

It is to be understood that positioning server 3 may comprise various other components like a user interface for receiving user input.

Furthermore, as an example embodiment, server 9 might represent a positioning server. Then, processor 900 executes a computer program code stored (e.g. computer program code causing server 9 to determine a radio map of the predetermined environment of system 300 based on radio fingerprint observation reports collected by mobile devices like mobile devices 2-1 to 2-3) in program memory 301. For example, positioning server 9 may use network interface 903 to receive radio fingerprint observation reports from mobile devices 2-1 to 2-3 and/or transmit radio map information to mobile devices 2-1 to 2-3.

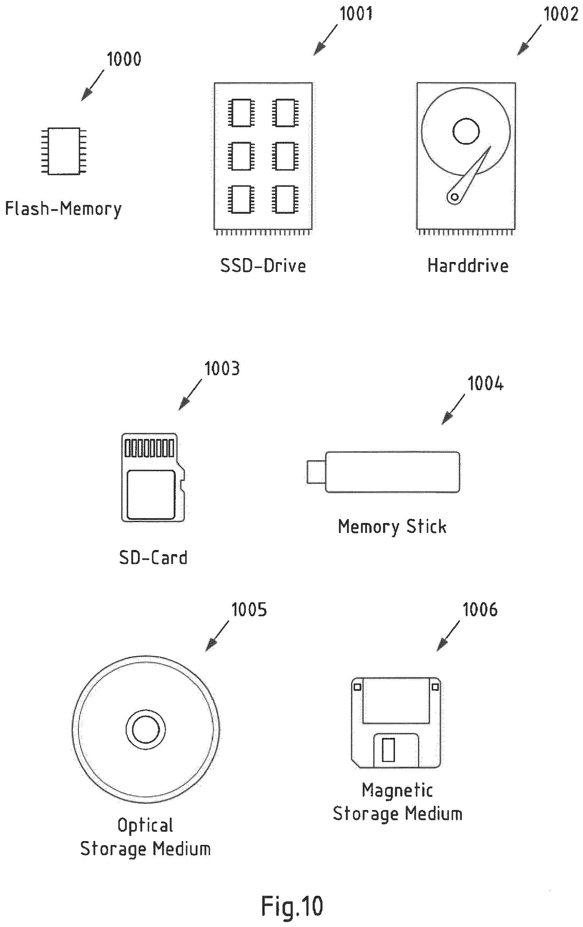

Fig. 10 is a schematic illustration of examples of tangible and non-transitory computer-readable storage media according to the present invention that may for instance be used to implement memory 801 of Fig. 8, and memory 901 of Fig. 9. To this end, Fig. 10 displays a flash memory 1000, which may for instance be soldered or bonded to a printed circuit board, a solid-state drive 1001 comprising a plurality of memory chips (e.g. Flash memory chips), a magnetic hard drive 1002, a Secure Digital (SD) card 1003, a Universal Serial Bus (USB) memory stick 1004, an optical storage medium 1005 (such as for instance a CD-ROM or DVD) and a magnetic storage medium 1006.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:
(a) hardware-only circuit implementations (such as implementations in only analog and/or digital circuitry)
(b) combinations of circuits and software (and/or firmware), such as: (1) to a combination of processor(s) or (2) to sections of processor(s)/ software (including digital signal processor(s)), software, and memory(ies) that work together to cause an apparatus, such as a mobile phone, to perform various functions) and
(c) to circuits, such as a microprocessor(s) or a section of a microprocessor(s), that require software or firmware for operation, even if the software or firmware is not physically present

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.

Any of the processors mentioned in this text, in particular but not limited to processors 800 and 900 of Figs. 8 and 9, could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions or steps described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

The wording "A, or B, or C, or a combination thereof' or "at least one of A, B and C" may be understood to be not exhaustive and to include at least the following: (1) A, or (2) B, or (3) C, or (4) A and B, or (5) A and C, or (6) B and C, or (7) A and B and C.

It will be understood that all presented embodiments are only exemplary, and that any feature presented for a particular exemplary embodiment may be used with any aspect of the invention on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

## Claims

1. A method comprising:
- determining a first estimation of a position of a mobile device based on data associated with at least one access point of a first set of one or more access points, wherein the identifier of each access point of the first set of one or more access points is associated with a single location, and
- selecting, at least partially based on the first estimation of the position of a mobile device, data associated with at least one access point of a second set of one or more access points, wherein the identifier of each access point of the second set of access points is associated with a first location and with at least one second location, and wherein the selected data of at least one access point of the second set of one or more access points is associated with a position near to the first estimation of the position of the mobile device.

2. The method according to claim 1, comprising determining a second estimation of the position of the mobile device at least partially based on the selected data associated with at least one access point of the second set of one or more access points.

3. The method according to any of the preceding claims, wherein data associated with an access point of the second set of one or more access points is determined to be associated with a location near to the first estimation of the position of the mobile device if a position associated with the data of the respective access points is within a predefined distance compared to the first estimation of the position of the mobile device.

4. The method according to any of the preceding claims, wherein said selecting, at least partially based on the first estimation of the position of a mobile device, data associated with at least one access point of a second set of one or more access points, comprises, for each identifier of at least one identifier of at least one identifier obtained by the mobile device, selecting data associated with the respective identifier which is associated with a position near to the first estimation of the position of the mobile device.

5. The method according to any of the preceding claims, comprising, after determining the first estimation of the position of the mobile device, checking whether the first estimation of the position fulfills a quality criterion, and, if said checking yields a negative result, performing said step of selecting, at least partially based on the first estimation of the position of a mobile device, data associated with at least one access point of a second set of one or more access points and, preferably, determining the second estimation of the position of the mobile device.

6. The method according to claim 5, wherein said checking yields a negative result if the number of access points used for determining the first estimation of the position of the mobile device is less than a predefined number.

7. The method according to any of the preceding claims, comprising checking if an access point of the second set of one or more access points is considered to be a moving access point, and if this checking yields a positive result, removing this access point from the second set of one or more access points.

8. The method according to claim 7, wherein an access point of the second set of one or more access points is considered to be a moving access point if a first set of data associated with the identifier of the respective access point is associated with a first location and a first point in time or a first time period, a second set of data associated with the identifier of the respective access point is associated with a second location and a second point in time or second time period, and a third set of data associated with the identifier of the respective access point is associated with a third location and a third point in time or a third time period, and if at least one of the following holds:
(i) the maximum time difference between the first point in time, the second point in time and the third point in time or between the first time period, the second time period and the third time period is below a predefined time threshold;
(ii) the maximum distance between the first location, the second location and the third location is below a predefined distance threshold.

9. The method according to any of claims 1 to 8, wherein an access point of the second set of one or more access points is considered not to be a moving access point if one or more of the following holds:
(i) a first set of data associated with the identifier of the respective access point is associated with a first location and a first point in time or a first time period, and a second set of data associated with the identifier of the respective access point is associated with a second location and a second point in time or second time period, and wherein the distance between the first location and the second location is larger than a predefined distance threshold and a time period between the first point in time and the second point in time or between the first time period and the second time period is smaller than a predefined time threshold;
(ii) a first set of data associated with the identifier of the respective access point is associated with a first location and a first point in time or a first time period, and a second set of data associated with the identifier of the respective access point is associated with a second location and a second point in time or second time period, the second point in time being later than the first point in time or the second time period being later than the first time period, and wherein no data associated with the identifier is associated with the first location and a point in time or time period being later than the second point in time or the second time period.

10. The method according to claim 8, comprising, if it is detected that a first set of data associated with the identifier of the respective access point is associated with a first location and a first point in time or a first time period, and a second set of data associated with the identifier of the respective access point is associated with a second location and a second point in time or second time period, the second point in time being later than the first point in time or the second time period being later than the first time period, and wherein no data associated with the identifier is associated with the first location and a point in time or time period being later than the second point in time or the second time period:
- removing the respective access point from the second set of one or more access points; and
- including the respective access point in the first set of one or more access points, and,
- in particular, removing or ignoring the first set of data associated with the identifier of the respective access point.

11. The method according to any of the preceding claims, wherein an identifier of an access point comprises a BSSID or a MAC address (Universally Unique Identifier - UUID).

12. A computer program code, the computer program code when executed by a processor causing an apparatus to perform the method according to any of claims 1 to 11.

13. An apparatus, the apparatus comprising means for performing the method according to any of claims 1 to 11.

14. The apparatus according to claim 13, wherein the apparatus is a mobile device or a server or a cloud component.
